# EUROPEAN PATENT APPLICATION

(11) **EP 3 848 825 A1**
(43) Date of publication of application: **14.07.2021**
(21) Application number: 19864095.5
(22) Date of filing: 25.09.2019
(51) Int. Cl.: G06F 16/958

(54) **APPLICATION CLIENT LAUNCH METHOD, SERVICE SERVER, AND CLIENT DEVICE**

(30) Priority: 30.09.2018 CN 201811161883
(71) Applicant: HUAWEI TECHNOLOGIES CO., LTD., Shenzhen, Guangdong 518129 (CN)
(72) Inventor: CHEN, Xiaohui, Shenzhen, Guangdong 518129 (CN)
(74) Representative: Pfenning, Meinig & Partner mbB
(86) International application number: PCT/CN2019/107637
(87) International publication number: WO 2020/063607

(57) **Abstract**

This application provides a method for starting an application client, a service server, and a client device. The method includes: receiving, by a service server, a registration request for an application, and generating a user account number for a user; generating, by the service server, a dynamic web page based on the registration request, and sending an address of the dynamic web page and the user account number to a client device of the user, where the dynamic web page includes address information of the service server, and further includes a first program, and the first program is used to trigger the client device to start the application client and configure an address of the service server on the application client; and receiving, by the service server, a request for opening the dynamic web page, where the request is sent by the client device after the client device receives the address of the dynamic web page, and sending the dynamic web page to the client device. This implements automatic configuration of the address of the service server address on a client, improves startup efficiency of the application client, and facilitates a user operation.

## Description

### TECHNICAL FIELD

This application relates to software technologies, and in particular, to a method and an apparatus for starting an application client.

### BACKGROUND

A set of software (including a client and a server end) is sold to a plurality of customers through replication. Each customer may have an own service server. IP addresses and/or ports of servers of the server end may be different. Therefore, each client may need to be configured with a different IP address and/or a different port. An application for an application client especially for a mobile client, is generally released to an application market, for example, an App store or an Android market, and has a unified version. The client may need to access different server ends (corresponding to different service servers) to carry out services. If a user configures an address of a service server, user experience is poor, and various operation problems may occur.

Another solution is that an enterprise administrator repacks the client into different client applications (APP). During repacking, the enterprise administrator embeds an IP address and/or a port of the server end in an APP installation file for separate release. Customers of different enterprises use their own Apps. In this way, the service server can be accessed without configuration, but the enterprise administrator needs to repack and release the client App, and the process is complex. Another method is to use a device ID to uniquely identify a corresponding service server, and use a unified registration server provided by a device vendor to establish an association between a client device and the service server, to obtain an IP address and/or a port of an enterprise service server. However, the client needs to provide the unique device ID, which is unrealistic in many cases.

### SUMMARY

Embodiments of this application provide a method for starting an application client, a service server, and a client device, to resolve a prior-art problem of inconvenient configuration of a service server, and reduce a workload of a user in configuring an address of a server. To achieve the foregoing objective, the following technical solutions are used in the embodiments of this application.

According to a first aspect, an embodiment of this application provides a method for starting an application client. The method includes:

A service server receives a registration request for an application, and generates a user account number for a user; the service server generates a dynamic web page based on the registration request, and sends an address of the dynamic web page and the user account number to a client device of the user, where the dynamic web page includes address information of the service server, and further includes a first program, and the first program is used to trigger the client device to start the application client and configure an address of the service server on the application client; and the service server receives a request for opening the dynamic web page, where the request is sent by the client device after the client device receives the address of the dynamic web page, and sends the dynamic web page to the client device.

Service server address provisioning is integrated into a user registration process. The address information of the server is carried to the client device by using the dynamic web page. The dynamic web page may pull up the application and carry the address of the service server from the service server to the application client APP, so that the application client APP accesses a corresponding service server without configuration.

In a possible design method, the dynamic web page further includes a download address of the application client, and the first program is further configured to: when it is determined that the application client is not installed in the client device, trigger an interface of the dynamic web page to jump to a download page of the application client or directly download the application client.

In this possible design method, when the application client is not installed in the client device, it can also be ensured, through a determining logic and a processing mechanism in the first program, that the application client is downloaded and installed, to improve startup efficiency of the application client and facilitates the user.

In a possible design method, the first program is further configured to store the address information of the service server in the client device, and when the application client is completely downloaded and started, trigger the application client to read the address information of the service server from the client device.

In a possible design method, the generated dynamic web page includes the user account number, and the first program is further configured to fill the user account number into the application client when the application client is started.

Because the dynamic web page may further include user account number information, the user account number may also be automatically filled into the application client, to further reduce operation steps of the user on the client device.

In a possible design method, the registration request includes communication address information of the user, and the service server sends the address of the dynamic web page and the user account number to the client device of the user based on the communication address information.

In a possible design method, the communication address information of the user includes a user EMAIL or a mobile phone number, and the dynamic web page address is a URL address of the dynamic web page.

In a possible design method, the address information of the service server includes an IP address or domain name information of the service server. If the port is default, only the IP address of the service server needs to be sent to the client. Certainly, the address information of the service server further includes a port number. In addition, the address information of the service server may be the domain name information, and the application client may finally obtain the IP address of the service server in a manner such as DNS resolution.

According to a second aspect, an embodiment of this application provides a method for starting an application client, including: A client device receives an address, of a dynamic web page, sent by a service server of an application; the client device sends, based on the address of the dynamic web page, a request for downloading the dynamic web page to the application server; the client device receives the dynamic web page sent by the service server, where the dynamic web page includes address information of the service server, and further includes a first program, and the first program is used to trigger the client device to start the application client and configure the address information of the service server on the application client; and the client device starts the application client, where the application client provides a service for a user through the service server.

In a possible design method, the dynamic web page further includes a download address of the application client, and the first program is further configured to: when it is determined that the application client is not installed in the client device, trigger an interface of the dynamic web page to jump to a download page of the application client or directly download the application client.

In a possible design method, the first program is further configured to store the address information of the service server in the client device, and when the application client is completely downloaded and started, trigger the application client to read the address information of the service server from the client device.

In a possible design method, the dynamic web page includes a user account number, and the first program is further configured to fill the user account number into the application client when the application client is started.

In a possible design method, the address information of the service server includes an IP address or domain name information of the service server. The address information of the service server further includes a port number.

According to a third aspect, an embodiment of this application provides a service server, where the service server includes a registration module, a dynamic web page generation module, and an interaction module, where the registration module is configured to receive a registration request for an application, and generate a user account number for a user; the dynamic web page generation module is configured to generate a dynamic web page based on the registration request, where the dynamic web page includes address information of the service server, and further includes a first program, and the first program is used to trigger a client device to start the application client and configure the address information of the service server on the application client; and the interaction module is configured to send an address of the dynamic web page and the user account number to the client device of the user, and further configured to receive a request for opening the dynamic web page, where the request is sent by the client device after the client device receives the address of the dynamic web page, and send the dynamic web page to the client device.

In a possible design method, the dynamic web page generation module is further configured to include a download address of the application client in the dynamic web page, and the first program is further configured to: when it is determined that the application client is not installed in the client device, trigger an interface of the dynamic web page to jump to a download page of the application client or download the application client.

In a possible design method, the first program is further configured to store the address information of the service server in the client device, and when the application client is completely downloaded and started, trigger the application client to read the address information of the service server from the client device.

In a possible design method, the dynamic web page generation module is further configured to include the user account number in the generated dynamic web page, and the first program is further configured to fill the user account number into the application client when the application client is started.

According to a fourth aspect, an embodiment of this application provides a client device, where the client device includes an interaction module and an execution module, where the interaction module is configured to receive an address, of a dynamic web page, sent by a service server of an application, and send, based on the address of the dynamic web page, a request for downloading the dynamic web page to the application server, and the interaction module is further configured to receive the dynamic web page sent by the service server, where the dynamic web page includes address information of the service server and a first program; and the execution module is configured to execute the first program in the dynamic web page, where the first program is used to start the application client and configure the address information of the service server on the application client.

In a possible design method, the dynamic web page further includes a download address of the application client, and the first program is further configured to: when it is determined that the application client is not installed in the client device, trigger an interface of the dynamic web page to jump to a download page of the application client or download the application client.

In a possible design method, the first program is further configured to store the address information of the service server in the client device, and when the application client is completely downloaded and started, trigger the application client to read the address information of the service server from the client device.

In a possible design method, the interaction module is further configured to receive a user account number sent by the service server, and the first program is further configured to fill the user account number into the application client when the application client is started.

According to a fifth aspect, an embodiment of this application provides a chip, including a CPU and a memory, where the memory is configured to store a computer-executable instruction, the CPU is connected to the memory, and when the chip runs, the CPU executes the computer-executable instruction stored in the memory, so that the chip is enabled to perform any one of the methods for starting an application client.

According to a sixth aspect, an embodiment of this application provides a computer storage medium, where the computer storage medium stores an instruction, and when the instruction is run on a computer, the computer is enabled to perform any one of the methods for starting an application client.

According to a seventh aspect, an embodiment of this application provides a computer program product, where the computer program product includes an instruction, and when the instruction is run on a computer, the computer is enabled to perform any one of the methods for starting an application client.

In addition, for technical effects brought by any design manner in the second to the seventh aspects, refer to technical effects brought by different design methods in the first aspect. Details are not described herein again.

### BRIEF DESCRIPTION OF DRAWINGS

FIG. 1 is a schematic diagram of a system architecture or a scenario to which an embodiment of the present invention is applied;
FIG. 2A and FIG. 2B are schematic diagrams of a signaling procedure of a method for starting an application client according to an embodiment of the present invention;
FIG. 3 is a possible schematic diagram of a structure of a client device according to an embodiment of the present invention;
FIG. 4 is a possible schematic diagram of a structure of a service server according to an embodiment of the present invention; and
FIG. 5 is a schematic diagram of a structure of a service server or a client device according to an embodiment of this application.

### DESCRIPTION OF EMBODIMENTS

In the following, some terms of the embodiments of this application are described, to help a person skilled in the art have a better understanding.

The embodiments of the present invention are mainly applied to a communication system of a C/S architecture, so that a unified application client can conveniently find a corresponding server end (a corresponding service server), and establish a communication connection to carry out a service activity. An application scenario is as follows: A service system has a plurality of copies that are sold to a plurality of customers. A service server of each customer has a different address, such as an IP address and a port. Clients are unified. However, the clients need to connect to service servers of their own enterprises. Therefore, addresses of the service servers are required, for example, the IP address and the port. The present invention provides a method that a client can automatically obtain an IP address and a port of a service server of the client, and does not need to be manually configured by a user.

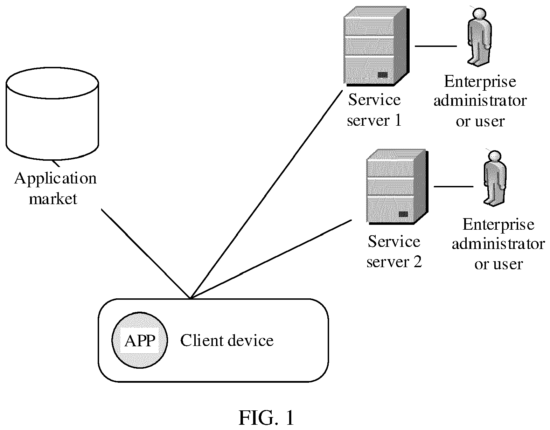

FIG. 1 is a schematic diagram of a system architecture or a scenario to which an embodiment of the present invention is applied. The system architecture includes a service server and a client device. When an APP needs to be downloaded, the system architecture interacts with an application market. A client application APP of an application may be installed on the client device, and the application APP needs to communicate with a corresponding service server to complete a service. The client application APP may be downloaded from the application market. The application market may be an App store of Apple, or may be an Android application market or an application store of a manufacturer. This is not limited in this embodiment of the present invention. The APP is an executable program provided for an end user, including but not limited to an .exe file in a windows operating system, a .pkg file in a MAC operating system, an .apk file in an Android operating system, and an .ipa file in an iOS operating system. These Apps are generally released by the manufacturer and are downloaded from the App store or a manufacturer website and installed on a client device of the end user. The client device includes but is not limited to a windows notebook computer, a laptop, a desktop computer, a MAC terminal, mobile phones such as iPhone, iPad, an Android phone, and an Android pad, and the like. The service server is usually installed on an enterprise server. In actual deployment, the service server may be loaded on one or more physical servers or implemented through a plurality of physical servers, and finally provides a service for the end user or an enterprise by working with the APP.

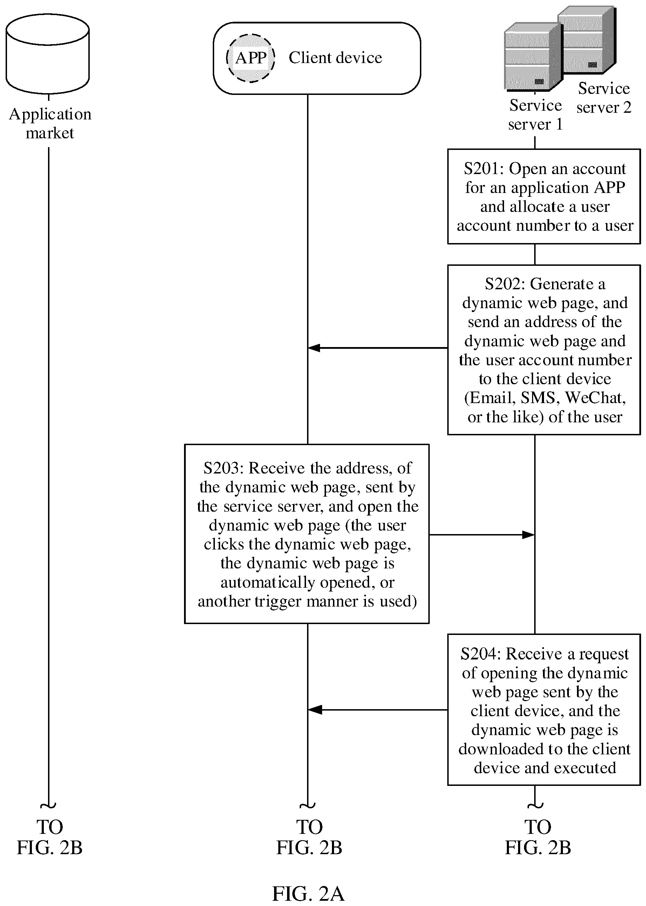

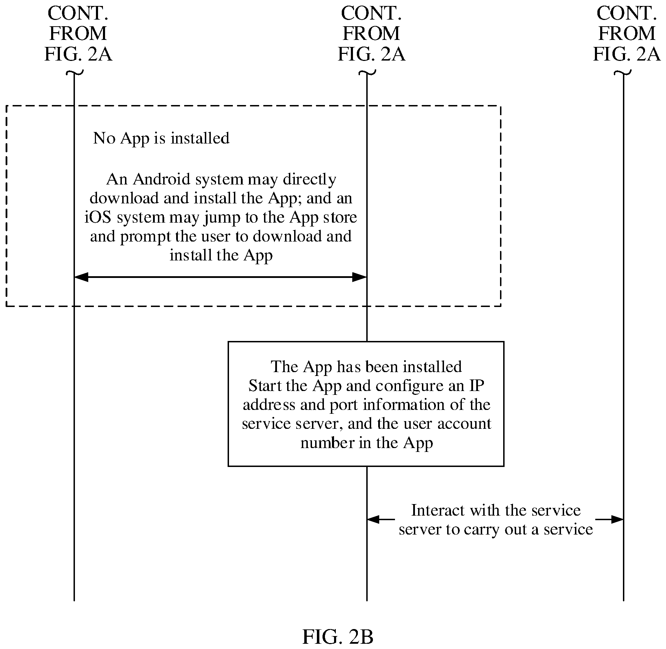

The following describes the technical solutions provided in the embodiments of this application with reference to the accompanying drawings. In the following description process, the technical solutions provided in the embodiments of this application are applied to the application scenario shown in FIG. 1. FIG. 2A and FIG. 2B are schematic diagrams of a signaling procedure of a method for starting an application client according to an embodiment of this application. A procedure of the method is described as follows.

S201: A service server receives a registration request for an application APP, and allocates a user account number to a user.

The service server is a service server that provides a service for the application APP in a C/S architecture. Herein, the registration request for the application APP may be a request for applying for an application account (user ID) of the user by an enterprise administrator for the user, or may be a request for applying for an application account (user ID) by the user, as long as an operator has a corresponding permission, which is not limited in this embodiment of the present invention. If the user meets a preset registration condition, the service server allocates one or more user account numbers to the user. In actual operation, the user may further perform personalized definition or naming on the account applied for by the user, for example, use a nickname or another identifier. Alternatively, some user-defined nicknames or identifiers may be used to apply to the service server for being used as the user account number, which is not limited in this embodiment of the present invention. As shown in Table 1, Table 1 is a schematic diagram of a correspondence among a service server, an allocated user account number, and a user nickname. Usually, the allocated user account number is unique on one service server.

**Table 1**

| Service server | Allocated user account number | User nickname |
|---|---|---|
| Service server 1 (IP 1, port) | User ID 1 | Zhang San |
| | User ID 2 | Li Si |
| | User ID 3 | Wang Wu |
| | | |
| Service server 2 (IP 2, port) | User ID X | A |
| | User ID Y | B |
| | User ID Z | C |
| | | |

S202: The service server generates a dynamic web page for the user, and sends an address of the dynamic web page and the user account number to a client device of the user, where the dynamic web page includes address information of the service server, for example, an IP address and port information. Certainly, the address information of the service server may also be a domain name, and the application client may find an actual IP address of the service server based on the domain name. The dynamic web page further includes a first program, and the first program is configured to trigger the client device to start (or activate or start) the application client, and configure the IP address and port information of the service server on the application client. A possible example of a first program code for implementing the foregoing triggering function is as follows. In the following program code, app.setAsDefaultProtocolClient('cloudlink'); //cloudlink is a name (ID) of a client program.

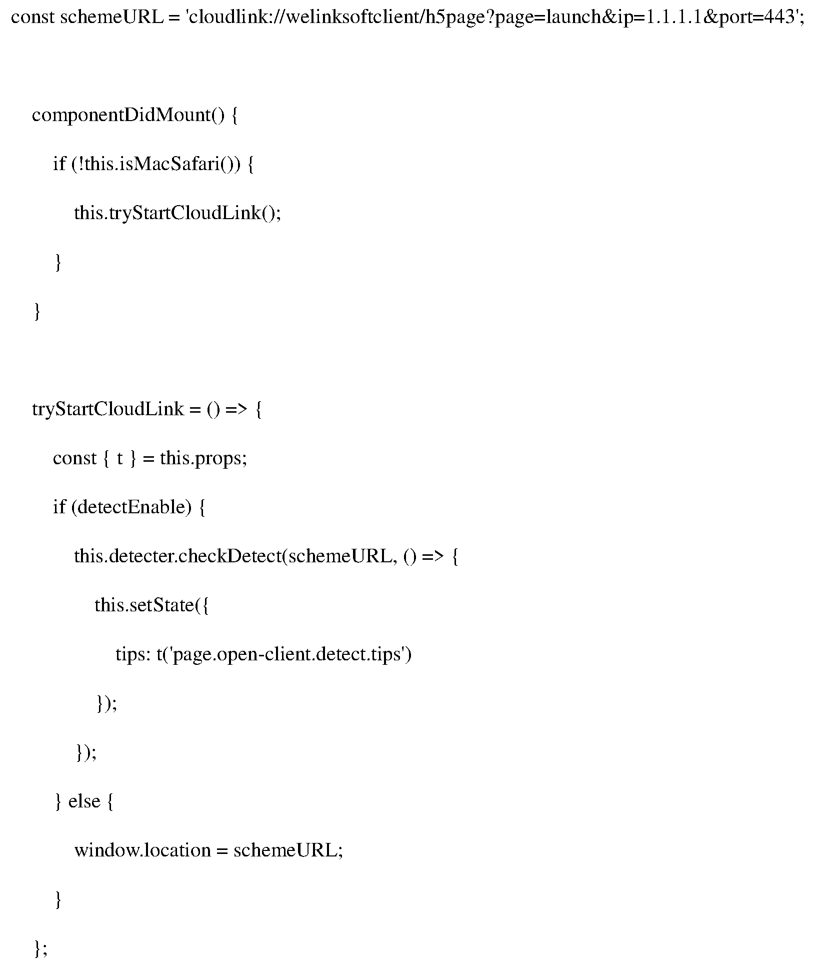

The dynamic web page refers to a web page programming technology or a web page file relative to a static web page. The dynamic web page integrates a basic html syntax specification with advanced programming languages such as Java, VB, and VC and technologies such as database programming to implement efficient, dynamic, and interactive management of website content and styles. Therefore, in this sense, a web page generated by using the web page programming technology that combines an advanced programming language other than HTML and a database technology is a dynamic web page.

A mechanism for triggering to start the application client may be implemented through a scheme mechanism. When the application is installed, information needs to be registered with an operating system. When receiving a link request, the operating system pulls up a corresponding registered application based on an identifier of the application. Certainly, there may be another possible implementation mechanism, which is not limited in this embodiment of the present invention.

When an administrator or the user opens an account, communication address information of the user is further provided to the service server, for example, may be a mobile phone number, an email address, or a WeChat account of the user. After generating the dynamic web page for the user, the service server sends an address of the dynamic web page to the client device of the user by using the communication address information. In this way, the service server also stores the user account number, a corresponding communication address information of the user, and a correspondence between the user account number and the communication address information of the user.

Optionally, because the application client APP is not necessarily downloaded and installed in the client device, the dynamic web page may further include a download address of the application client, and the first program further includes "a logic for determining whether the application client is installed in the client device". (for example, such service logic is implemented by using a client script language such as JavaScript or ActionScript). In this way, the first program is further configured to: when it is determined that the application client is not installed on the client device, trigger an interface of the dynamic web page to jump to a download page of the application client (based on the download address of the application client) or directly download the application client. Optionally, the first program may be further configured to: store the address information of the service server in the client device, for example, write the address information into an application such as a clipboard or a notepad of the client device, or even some temporary caches or registers, and when the application client is completely downloaded and started, trigger the application client to read the address information of the service server from the client device, for example, read the address information from the application such as the clipboard or the notepad. A possible example of the implementation program code is as follows:

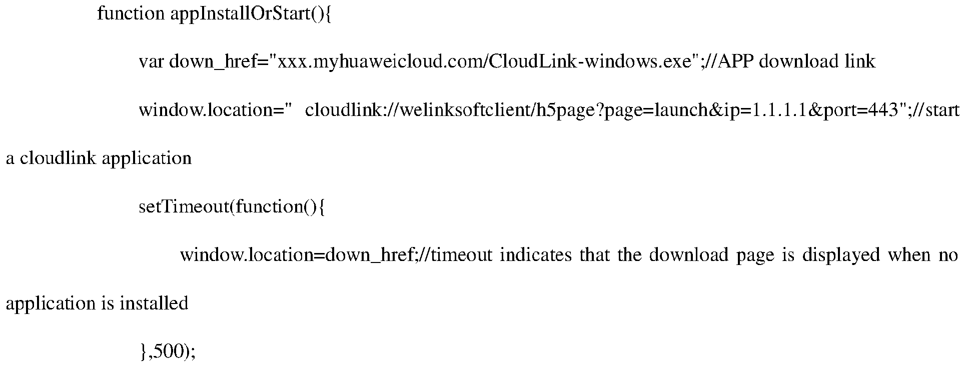

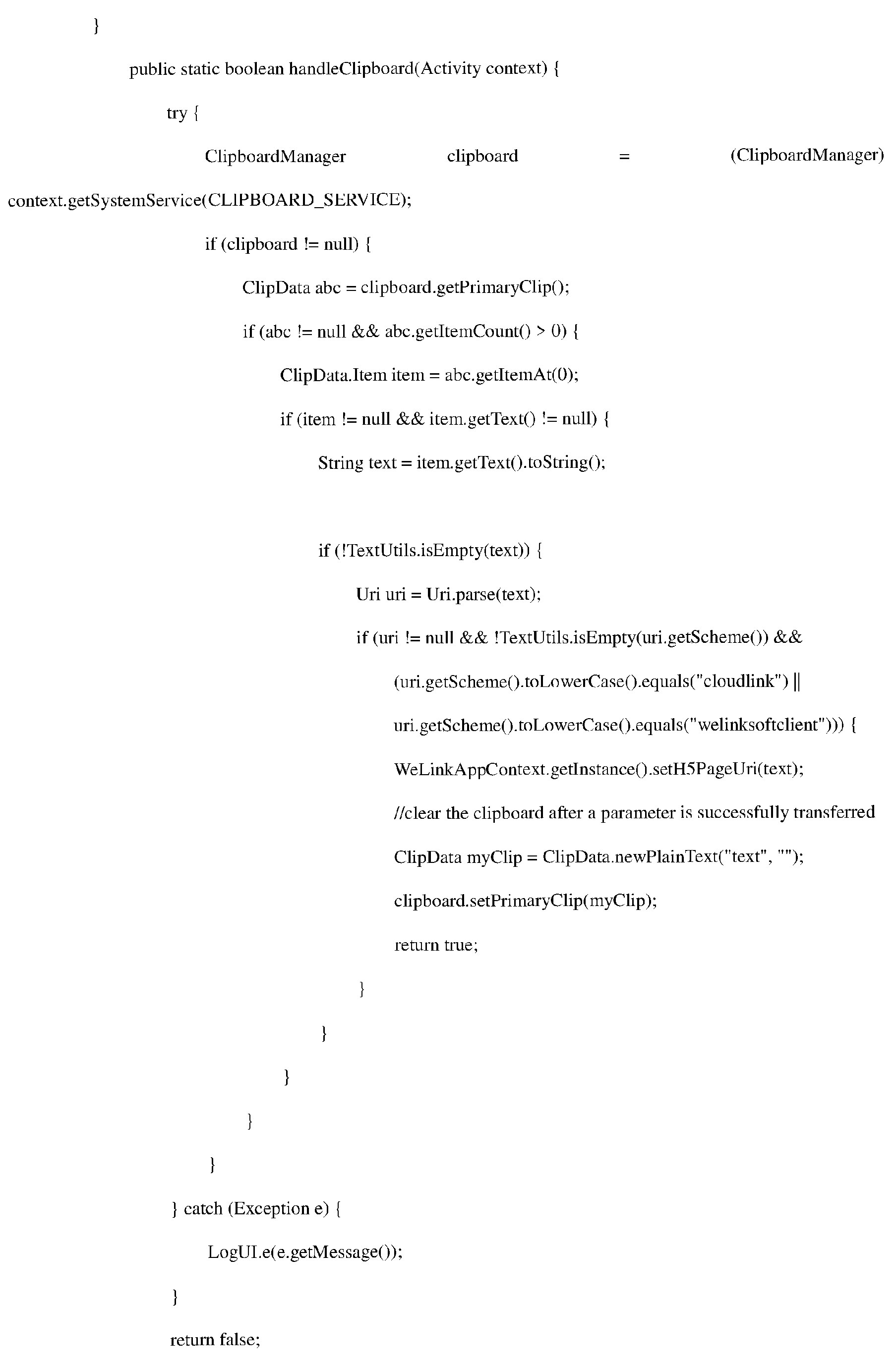

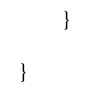

Optionally, because the service server stores the user account number information, the generated dynamic web page may further include the user account number. The first program may be further configured to fill the user account number into the application client when the application client is started, to further reduce steps of entering the user account number by the user.

S203: The client device receives the address, of the dynamic web page, sent by the service server.

The user receives the address, of the dynamic web page address (for example, a short message, an email, or an instant message including a dynamic web page link), sent by the service server through the client device. The user may open (or run) the dynamic web page by logging in to the address of the dynamic web page or directly clicking a dynamic web page address URL link.

S204: The service server receives a request of opening the dynamic web page sent by the client device, and the dynamic web page is downloaded to the client device and executed. For content of the dynamic web page after the dynamic web page is run, refer to the description in the step S202. Details are not described herein again.

It may be understood that, in a process in which the client device runs the dynamic web page, based on a design of the first program, configuration of the application client or a setting of an operating system of the client device may include or embed some confirmation or selection operations of the user.

In the solution of the embodiment of the present invention, service server address provisioning is integrated into a user registration process. The address information of the server is carried to the client device by using the dynamic web page. The dynamic web page may pull up the application and carry the address of the service server from the service server to the application client APP, so that the application client APP accesses a corresponding service server without configuration. Further, because the dynamic web page may further include the user account number information, the user account number may also be automatically filled into the application client, to further reduce operation steps of the user on the client device. Further, the dynamic web page may further include the download address of the application client. When the application client is not installed in the client device, it can also be ensured, through the determining logic and the processing mechanism in the first program, that the application client is downloaded and installed. This improves startup efficiency of the application client and facilitates the user.

The foregoing mainly describes the solutions provided in the embodiments of this application from a perspective of interaction between the service server and the client device. It may be understood that, to implement the foregoing functions, the service server and the client device include corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional modules of the service server or the client device may be divided based on the foregoing method examples. For example, each functional module may be obtained through division corresponding to each function, or two or more functions may be integrated into one processing module. The integrated module may be implemented in a form of hardware, or may be implemented in a form of a software functional module. It should be noted that, in this embodiment of this application, module division is an example, and is merely logical function division. In actual implementation, another division manner may be used.

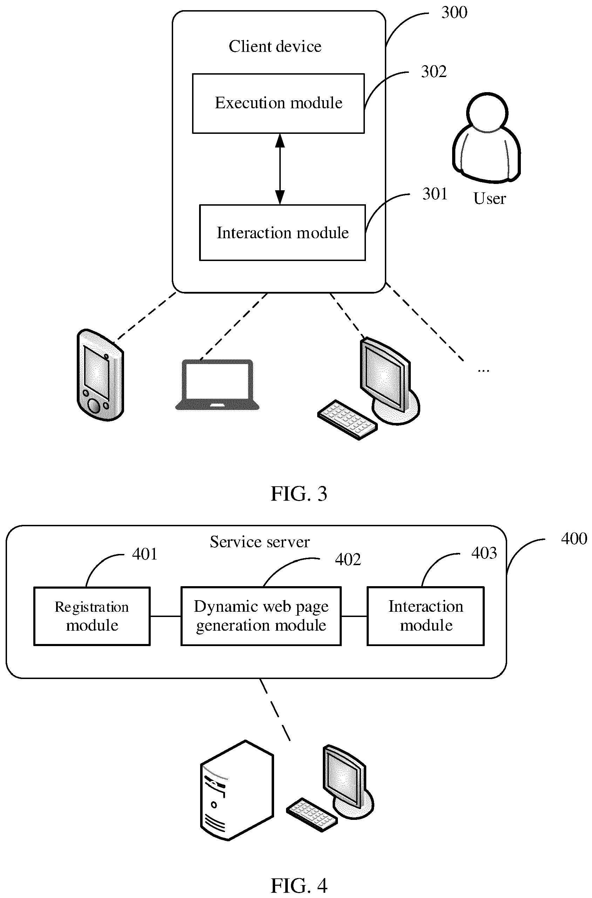

FIG. 3 is a possible schematic diagram of a structure of a client device 300 in the foregoing embodiment. The client device 300 includes an interaction module 301 and an execution module 302. The interaction module 301 is configured to: receive an address, of a dynamic web page, sent by a service server of an application, send, based on the address of the dynamic web page, a request for downloading the dynamic web page to the application server, and receive the dynamic web page sent by the service server, where the dynamic web page includes address information of the service server and a first program.

The execution module 302 is configured to execute the first program in the dynamic web page, where the first program is used to start the application client and configure the address information of the service server on the application client.

Optionally, the dynamic web page further includes a download address of the application client, and the first program is further configured to: when it is determined that the application client is not installed in the client device, trigger an interface of the dynamic web page to jump to a download page of the application client.

Optionally, the first program is further configured to store the address information of the service server in the client device, and when the application client is completely downloaded and started, trigger the application client to read the address information of the service server from the client device.

Optionally, the interaction module 301 is further configured to receive a user account number sent by the service server, and the first program is further configured to fill the user account number into the application client when the application client is started.

FIG. 4 is a possible schematic diagram of a structure of a service server 400 in the foregoing embodiment. The service server 400 includes a registration module 401, a dynamic web page generation module 402, and an interaction module 403. The registration module 401 is configured to receive a registration request for an application, and generate a user account number for a user. The dynamic web page generation module 402 is configured to generate a dynamic web page based on the registration request, where the dynamic web page includes address information of the service server, and further includes a first program, and the first program is used to trigger the client device to start the application client and configure the address information of the service server on the application client. The interaction module 403 is configured to send the address of the dynamic web page and the user account number to a client device of the user, and is further configured to receive a request for opening the dynamic web page, where the request is sent by the client device after the client device receives the address of the dynamic web page, and send the dynamic web page to the client device.

Optionally, the dynamic web page generation module 402 is further configured to include a download address of the application client in the dynamic web page, and the first program is further configured to: when it is determined that the application client is not installed in the client device, trigger an interface of the dynamic web page to jump to a download page of the application client.

Optionally, the first program is further configured to store the address information of the service server in the client device, and when the application client is completely downloaded and started, trigger the application client to read the address information of the service server from the client device.

Optionally, the dynamic web page generation module 402 is further configured to include the user account number in the generated dynamic web page, and the first program is further configured to fill the user account number into the application client when the application client is started.

All related content in all the foregoing embodiments may be referenced to function descriptions of functional modules corresponding to the client device and the service server. Details are not described herein again. The client device 300 and the service server 400 provided in this embodiment of this application are configured to perform the methods in the foregoing embodiments. Therefore, for technical effects that can be achieved by the client device 300 and the service server 400, refer to the foregoing method embodiments. For example, refer to related program code in the foregoing method embodiments. Details are not described herein again.

The "module" in FIG. 3 and FIG. 4 may be an application-specific integrated circuit (ASIC), an electronic circuit, a processor and a memory that execute one or more software or firmware programs, a combined logic circuit, and another component that provides the foregoing functions. When the integrated unit or module is implemented in the form of a software functional unit and sold or used as an independent product, the integrated unit may be stored in a computer-readable storage medium.

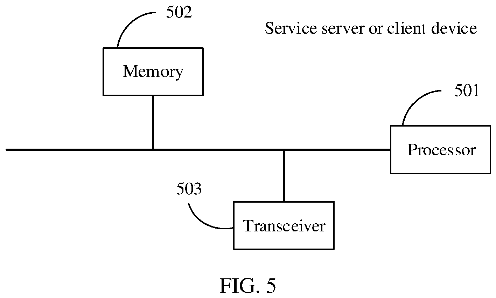

FIG. 5 is a schematic diagram of a structure of another service server or a client device according to an embodiment of this application. The structure includes a processor 501, a memory 502, and a transceiver 503. The processor 501 is connected to the memory 502 and the transceiver 503. For example, the processor 501 may be connected to the memory 502 and the transceiver 503 through a bus. The processor 501 may be configured to support the service server in performing a corresponding function in the foregoing embodiment, or may be configured to support the client device in performing a corresponding function in the foregoing embodiment. The processor 501 may be a central processing unit (English: central processing unit, CPU), a network processor (English: network processor, NP), a hardware chip, or any combination thereof. The hardware chip may be an application-specific integrated circuit (English: application-specific integrated circuit, ASIC), a programmable logic device (English: programmable logic device, PLD), or a combination thereof. The PLD may be a complex programmable logic device (English: complex programmable logic device, CPLD), a field-programmable gate array (English: field-programmable gate array, FPGA), a generic array logic (English: generic array logic, GAL), or any combination thereof. The memory 502 is configured to store program code and the like. The memory 502 may include a volatile memory (English: volatile memory), for example, a random access memory (English: random access memory, RAM for short). The memory 502 may also include a non-volatile memory (English: non-volatile memory), for example, a read-only memory (English: read-only memory, ROM for short), a flash memory (English: flash memory), a hard disk (English: hard disk drive, HDD for short), or a solid-state drive (English: solid-state drive, SSD for short). The memory 502 may further include a combination of memories of the foregoing types. The transceiver 503 may be a communications module or a transceiver circuit, and is configured to implement transmission of information such as data and signaling between the service server or another network unit of the client device in the foregoing embodiments. The processor 501 may invoke the program code to perform the operations in the method embodiment shown in FIG. 2A and FIG. 2B.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer. For example, the computer instruction may be stored or transmitted by using a magnetic medium (for example, a floppy disk, a hard disk, or a magnetic tape), an optical medium (for example, a DVD), or a semiconductor medium (for example, a solid state disk Solid State Disk (SSD)).

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for starting an application client, comprising:
receiving, by a service server, a registration request for an application, and generating a user account number for a user;
generating, by the service server, a dynamic web page based on the registration request, and sending an address of the dynamic web page and the user account number to a client device of the user, wherein the dynamic web page comprises address information of the service server, and further comprises a first program, and the first program is used to trigger the client device to start the application client and configure an address of the service server on the application client; and
receiving, by the service server, a request for opening the dynamic web page, wherein the request is sent by the client device after the client device receives the address of the dynamic web page, and sending the dynamic web page to the client device.

2. The method according to claim 1, wherein the dynamic web page further comprises a download address of the application client, and the first program is further configured to: when it is determined that the application client is not installed in the client device, trigger an interface of the dynamic web page to jump to a download page of the application client or directly download the application client.

3. The method according to claim 2, wherein the first program is further configured to store the address information of the service server in the client device, and when the application client is completely downloaded and started, trigger the application client to read the address information of the service server from the client device.

4. The method according to any one of claims 1 to 3, wherein the generated dynamic web page comprises the user account number, and the first program is further configured to fill the user account number into the application client when the application client is started.

5. The method according to any one of claims 1 to 4, wherein the registration request comprises communication address information of the user, and the service server sends the address of the dynamic web page and the user account number to the client device of the user based on the communication address information.

6. The method according to claim 5, wherein the communication address information of the user comprises a user EMAIL or a mobile phone number, and the dynamic web page address is a URL address of the dynamic web page.

7. The method according to any one of claims 1 to 6, wherein the address information of the service server comprises an IP address or domain name information of the service server.

8. The method according to claim 7, wherein the address information of the service server further comprises a port number.

9. A method for starting an application client, comprising:
receiving, by a client device, an address, of a dynamic web page, sent by a service server of an application;
sending, by the client device based on the address of the dynamic web page, a request for downloading the dynamic web page to the application server;
receiving, by the client device, the dynamic web page sent by the service server, wherein the dynamic web page comprises address information of the service server, and further comprises a first program, and the first program is used to trigger the client device to start the application client and configure the address information of the service server on the application client; and
starting, by the client device, the application client, wherein the application client provides a service for a user through the service server.

10. The method according to claim 9, wherein the dynamic web page further comprises a download address of the application client, and the first program is further configured to: when it is determined that the application client is not installed in the client device, trigger an interface of the dynamic web page to jump to a download page of the application client or directly download the application client.

11. The method according to claim 9 or 10, wherein the first program is further configured to store the address information of the service server in the client device, and when the application client is completely downloaded and started, trigger the application client to read the address information of the service server from the client device.

12. The method according to any one of claims 9 to 11, wherein the dynamic web page comprises a user account number, and the first program is further configured to fill the user account number into the application client when the application client is started.

13. The method according to any one of claims 9 to 12, wherein the address information of the service server comprises an IP address or domain name information of the service server.

14. The method according to claim 13, wherein the address information of the service server further comprises a port number.

15. A service server, comprising a registration module, a dynamic web page generation module, and an interaction module, wherein
the registration module is configured to receive a registration request for an application, and generate a user account number for a user;
the dynamic web page generation module is configured to generate a dynamic web page based on the registration request, wherein the dynamic web page comprises address information of the service server, and further comprises a first program, and the first program is used to trigger a client device to start the application client and configure the address information of the service server on the application client; and
the interaction module is configured to send an address of the dynamic web page and the user account number to the client device of the user, and further configured to receive a request for opening the dynamic web page, wherein the request is sent by the client device after the client device receives the address of the dynamic web page, and send the dynamic web page to the client device.

16. The service server according to claim 15, wherein the dynamic web page generation module is further configured to comprise a download address of the application client in the dynamic web page, and the first program is further configured to: when it is determined that the application client is not installed in the client device, trigger an interface of the dynamic web page to jump to a download page of the application client or download the application client.

17. The service server according to claim 15 or 16, wherein the first program is further configured to store the address information of the service server in the client device, and when the application client is completely downloaded and started, trigger the application client to read the address information of the service server from the client device.

18. The service server according to any one of claims 15 to 17, wherein the dynamic web page generation module is further configured to comprise the user account number in the generated dynamic web page, and the first program is further configured to fill the user account number into the application client when the application client is started.

19. A client device, comprising an interaction module and an execution module, wherein
the interaction module is configured to receive an address, of a dynamic web page, sent by a service server of an application, and send, based on the address of the dynamic web page, a request for downloading the dynamic web page to the application server, and the interaction module is further configured to receive the dynamic web page sent by the service server, wherein the dynamic web page comprises address information of the service server and a first program; and
the execution module is configured to execute the first program in the dynamic web page, wherein the first program is used to start the application client and configure the address information of the service server on the application client.

20. The client device according to claim 19, wherein the dynamic web page further comprises a download address of the application client, and the first program is further configured to: when it is determined that the application client is not installed in the client device, trigger an interface of the dynamic web page to jump to a download page of the application client or download the application client.

21. The client device according to claim 19 or 20, wherein the first program is further configured to store the address information of the service server in the client device, and when the application client is completely downloaded and started, trigger the application client to read the address information of the service server from the client device.

22. The client device according to any one of claims 19 to 21, wherein the interaction module is further configured to receive a user account number sent by the service server, and the first program is further configured to fill the user account number into the application client when the application client is started.

23. A chip, comprising a central processing unit CPU and a memory, wherein
the memory is configured to store a computer-executable instruction, the CPU is connected to the memory, and when the chip runs, the CPU executes the computer-executable instruction stored in the memory, so that the chip is enabled to perform the method according to any one of claims 1 to 14.

24. A computer storage medium, wherein the computer storage medium stores an instruction, and when the instruction is run on a computer, the computer is enabled to perform the method according to any one of claims 1 to 14.

25. A computer program product, wherein the computer program product comprises an instruction, and when the instruction is run on a computer, the computer is enabled to perform the method according to any one of claims 1 to 14.
